# EUROPÄISCHE PATENTSCHRIFT

(11) **EP 2 556 129 B1**
(45) Veröffentlichungstag und Bekanntmachung des Hinweises auf die Patenterteilung: **18.05.2016**
(21) Anmeldenummer: 11711088.2
(22) Anmeldetag: 30.03.2011
(51) Int. Cl.: C09K 5/12, F24J 2/46

(54) **FLUIDER SCHWEFEL MIT VERBESSERTER VISKOSITÄT ALS WÄRMETRÄGER**
LIQUID SULFUR WITH IMPROVED VISCOSITY AS A HEAT TRANSFER MEDIUM
SOUFRE LIQUIDE À VISCOSITÉ AMÉLIORÉE, UTILISÉ COMME CALOPORTEUR

(30) Priorität: 09.04.2010 EP 10159483
(43) Veröffentlichungstag der Anmeldung: 13.02.2013
(73) Patentinhaber: BASF SE, 67056 Ludwigshafen am Rhein (DE)
(72) Erfinder: MAJOR, Felix, 67251 Freinstein (DE); SEELER, Fabian, 69221 Dossenheim (DE); GARLICHS, Florian, 67435 Neustadt (DE); GÄRTNER, Martin, 67549 Worms (DE); MAURER, Stephan, 67435 Neustadt-Gimmeldingen (DE); WORTMANN, Jürgen, 67117 Limburgerhof (DE); LUTZ, Michael, 67346 Speyer (DE); HUBER, Günther, 67071 Ludwigshafen (DE); MACHHAMMER, Otto, 68163 Mannheim (DE); SCHIERLE-ARNDT, Kerstin, 64673 Zwingenberg (DE)
(74) Vertreter: BASF IP Association
(86) Internationale Anmeldenummer: PCT/EP2011/054883
(87) Internationale Veröffentlichungsnummer: WO 2011/124510

(56) Entgegenhaltungen:
- WO-A1-2005/071037
- WO-A1-2010/025692
- DE-A1-102008 046 071
- US-A- 4 335 578
- FANELLI R: "Solubility of hydrogen sulfide in sulfur", INDUSTRIAL AND ENGINEERING CHEMISTRY, AMERICAN CHEMICAL SOCIETY, US, Bd. 41, Nr. 9, 1. September 1949 (1949-09-01), Seiten 2031-2033, XP002563093,

## Beschreibung

Die vorliegende Erfindung betrifft eine Mischung, enthaltend elementaren Schwefel und ein Anionen enthaltendes Additiv, ein Verfahren zur Herstellung einer Mischung, enthaltend elementaren Schwefel und ein Anionen enthaltendes Additiv, die Verwendung einer Mischung, enthaltend elementaren Schwefel und ein Anionen enthaltendes Additiv, als Wärmeträger und/oder Wärmespeicher sowie Wärmeträger und/oder Wärmespeicher, welche eine Mischung, enthaltend elementaren Schwefel und ein Anionen enthaltendes Additiv, umfassen sowie solarthermische Kraftwerke, umfassend mit Mischungen, enthaltend elementaren Schwefel und ein Anionen enthaltendes Additiv, gefüllte Rohrleitungen, Wärmetauscher und/oder Behälter, jeweils wie in den Ansprüchen definiert.

Je nach Einsatzgebiet variiert das Anforderungsprofil für Wärmeträger- oder Wärmespeicherflüssigkeiten sehr stark, weshalb in der Praxis eine Vielzahl von Flüssigkeiten eingesetzt wird. Die Flüssigkeiten sollen bei Raumtemperatur oder gar niedrigeren Temperaturen flüssig sein und niedrige Viskositäten aufweisen. Für höhere Einsatztemperaturen kommt Wasser nicht mehr in Frage, sein Dampfdruck würde zu groß. Deshalb setzt man bis zu circa 320°C Kohlenwasserstoff-basierte Mineralöle und für Temperaturen bis zu 400 °C synthetische aromatenhaltige Öle oder Siliconöle ein (Verein Deutscher Ingenieure, VDI-Gesellschaft Verfahrenstechnik und Chemieingenieurwesen (GVC), VDI Wärmeatlas, 10. Auflage, Springer Verlag Berlin Heidelberg, 2006).

Eine noch junge Anwendung für Wärmeträgerflüssigkeiten stellen thermische Solarkraftwerke dar, die elektrische Energie im großen Maßstab mittelbar aus Sonnenstrahlen erzeugen (Butscher, R., Bild der Wissenschaft 2009, 3, Seiten 84 bis 92).

Hierbei wird die Sonnenstrahlung, beispielsweise über parabolisch geformte Spiegelrinnen, in die Brennlinie von Spiegeln fokussiert. Dort befindet sich ein Metallrohr, das sich zur Vermeidung von Wärmeverlusten innerhalb eines Glasrohrs befinden kann, wobei der Raum zwischen den konzentrischen Rohren evakuiert ist. Das Metallrohr wird von einer Wärmeträgerflüssigkeit durchströmt, welche durch die Sonnenstrahlung aufgeheizt wird. Derzeit setzt man als Wärmeträgerflüssigkeit beispielsweise ein Gemisch aus Diphenylether und Diphenyl ein.

Der Wärmeträger wird auf diese Weise durch die gebündelte Sonnenstrahlung auf maximal 400°C erhitzt. Der heiße Wärmeträger erhitzt in einem Dampferzeuger Wasser zu Wasserdampf. Dieser Wasserdampf treibt eine Turbine an und diese wiederum treibt, wie in einem konventionellen Elektrizitätskraftwerk, den Generator zur Stromer-Mit diesem Verfahren kann ein durchschnittlicher Wirkungsgrad von circa 16 Prozent bezogen auf den Energiegehalt der Sonneneinstrahlung erzielt werden. Der Wirkungsgrad der Dampfturbine beträgt bei dieser Eingangstemperatur cirka 37 Prozent.

Bisher wurden derartige Kraftwerke mit einer installierten Leistung von einigen hundert Megawatt gebaut und viele weitere sind insbesondere in Spanien, aber auch in Nordafrika und den USA in Planung.

Beide Bestandteile des als Wärmeträger verwendeten Gemisches aus Diphenylether und Diphenyl (im Folgenden wird diese Mischung als "Thermoöl" bezeichnet) sieden unter Normaldruck bei circa 256 °C. Der Schmelzpunkt des Diphenyls liegt bei 68-72 °C, der des Diphenylethers bei 26-39 °C. Durch das Mischen beider Substanzen wird der Schmelzpunkt auf 12 °C abgesenkt. Die Mischung aus beiden Substanzen kann bis maximal 400 °C eingesetzt werden, bei höheren Temperaturen tritt Zersetzung ein. Der Dampfdruck liegt bei dieser Temperatur bei etwa 10 bar, ein Druck, der in der Technik noch tolerierbar ist.

Es ist wünschenswert, höhere Turbinenwirkungsgrade als 37 Prozent zu erhalten. Hierzu sind allerdings höhere Dampfeingangstemperaturen als 400 °C notwendig.

Der Wirkungsgrad einer Dampfturbine steigt mit der Turbineneingangstemperatur. Moderne, fossil befeuerte Kraftwerke arbeiten mit Dampfeingangstemperaturen bis zu 650 °C und erreichen damit Wirkungsgrade um 45%.

Es wäre auch in solarthermischen Kraftwerken durchaus technisch möglich, die Wärmeträgerflüssigkeit in der Brennlinie der Spiegel auf Temperaturen um 650 °C zu erhitzen und damit ebenfalls derart hohe Wirkungsgrade wie bei fossil befeuerten Kraftwerken zu erzielen; das aber verbietet die begrenzte Temperaturbeständigkeit der derzeit verwendeten Wärmeträgerflüssigkeit.

Höhere Temperaturen als in Parabolrinnenkraftwerken können in solarthermischen Turmkraftwerken erreicht werden, bei denen ein Turm von Spiegeln umgeben ist, welche das Sonnenlicht auf einen Receiver im oberen Teil des Turms bündeln. In diesem Receiver wird ein Wärmeträger erhitzt, welcher dann über einen Wärmetauscher zur Dampferzeugung und zum Betrieb einer Turbine genutzt wird. In Turmkraftwerken (beispielsweise Solar II, Kalifornien, USA) wurde bereits eine Mischung aus Natriumnitrat (NaNO₃) und Kaliumnitrat (KNO₃) (60:40) als Wärmeträger verwendet. Diese Mischung kann problemlos bis 550 °C verwendet werden, hat allerdings einen sehr hohen Schmelzpunkt von 240 °C, das heißt, die Mischung erstarrt unterhalb dieser Temperatur und kann somit nicht mehr als Wärmeträger in Leitungen zirkulieren.

Als weiterer möglicher Hochtemperaturwärmeträger wurden solche auf der Basis von Schwefel vorgeschlagen. Schwefel schmilzt unter Normaldruck bei 120 °C und siedet bei Normaldruck bei 440°C. Flüssiger Schwefel ist als Wärmeträger allerdings problematisch, da er im Temperaturbereich von 160 bis 220 °C im Allgemeinen hochviskos und nicht pumpbar ist.

Es ist daher wünschenswert die Viskosität von geschmolzenem Schwefel herabzusetzen.

Zur Verminderung der Viskosität von Schwefelschmelzen beschreibt WO 2005/071037 den Schwefel mit kleineren Mengen von Selen und/oder Tellur zu mischen.
US 4 335 578 beschreibt die Viskositätsverminderung von Schwefelschmelzen durch Zusätze von Brom oder lod.

DE 10 2008 046071 A1 und WO 2010/0256921 A1 beschreiben, dass die Viskosität von Schwefel als Wärmeträgerflüssigkeit durch Zumischen von Halogen, wie Chlor, SCl₂ oder S₂Cl₂ erniedrigt werden kann.

DE 10 2008 046071 A1 beschreibt außerdem, dass Arsen als AszS₄ oder As₂S₃ in eine Schwefelschmelze eingebracht wird.

All diese Zusatzstoffe sind aber schon bei niedrigen Temperaturen und erst Recht bei den hohen Temperaturen der Schwefelschmelze hochkorrosiv.

Vorteilhaft ist es, ein solarthermisches Kraftwerk kontinuierlich zu betreiben. Dies wird beispielsweise erreicht, indem während Zeiten hoher Sonneneinstrahlung Wärme gespeichert wird, die nach Sonnenuntergang oder während Schlechtwetterphasen zur Stromproduktion genutzt werden kann.

Die Speicherung von Wärme kann direkt durch Lagerung des erhitzten Wärmeträgermediums in gut isolierten Vorratstanks erfolgen, oder indirekt durch Übertragung der Wärme vom erhitzten Wärmeträgermedium auf ein anderes Medium (Wärmespeicher), beispielsweise eine Natriumnitrat-Kaliumnitrat-Salzschmelze.

Eine indirekte Methode ist im 50 MW Kraftwerk Andasol I in Spanien realisiert, wobei hier ca. 28.000 t einer Schmelze von Natriumnitrat und Kaliumnitrat (60:40) als Wärmespeicher in einem gut isolierten Tank verwendet werden. Die Schmelze wird während der Sonneneinstrahlungszeiten von einem kälteren Tank (cirka 280 °C) über einen Thermoöl-Salz-Wärmetauscher in einen heißeren Tank gepumpt und dabei auf etwa 380 °C aufgeheizt. Dabei wird über einen Wärmetauscher Wärmeenergie aus dem Thermoöl ausgekoppelt und in die Salzschmelze eingekoppelt (Thermoöl-Salz-Wärmetauscher). In Zeiten niedriger Sonneneinstrahlung und nachts kann das Kraftwerk bei voll aufgeladenem Speicher etwa 7.5 h unter Vollast gefahren werden.

Es wäre allerdings von Vorteil, das Wärmeträgermedium auch als Wärmespeichermedium zu verwenden, da so die entsprechenden Thermoöl-Salz-Wärmetauscher eingespart werden könnten.

Außerdem könnte auf diese Weise ein möglicher Kontakt des Thermoöls mit reduzierenden Eigenschaften mit der stark oxidierend wirkenden Nitratschmelze vermieden werden. Auf Grund des deutlich höheren Preises des Thermoöls im Vergleich zur Natriumnitrat-Kaliumnitrat-Schmelze wurde Thermoöl bisher als Wärmespeicher nicht in Betracht gezogen.

Die Aufgabe der Erfindung ist die Bereitstellung eines gut verfügbaren, verbesserten Wärmeträger- und Wärmespeicherstoffs, vorzugsweise Wärmeträger- und Wärmespeicherflüssigkeit. Die Flüssigkeit sollte bei höheren Temperaturen als 400 °C eingesetzt werden können, bevorzugt über 500 °C. Gleichzeitig sollte der Schmelzpunkt niedriger sein als der von bekannten und bereits in der Technik verwendeten anorganischen Salzschmelzen, beispielsweise unter 130 °C. Die Flüssigkeit sollte zudem einen technisch beherrschbaren, möglichst niedrigen Dampfdruck aufweisen, bevorzugt niedriger als 10 bar.

Grundsätzlich ist für die vorliegende Erfindung jegliche Art elementaren Schwefels gut geeignet. Elementarer Schwefel ist seit dem Altertum bekannt und beispielsweise in Gmelins Handbuch der Anorganischen Chemie (8. Auflage, Verlag Chemie GmbH, Weinheim, 1953) beschrieben. Er kann aus gediegenen Vorkommen, sulfidischen Erzen oder nach dem Frasch-Verfahren gewonnen werden, fällt aber auch in großer Menge bei der Entschwefelung von Erdöl und Erdgas an.

Gut geeigneter Schwefel hat eine Reinheit im Bereich von 98 bis 100 Gew.-%, vorzugsweise im Bereich von 99,5 bis 100 Gew.-%. Die Differenz zu 100 Gew.-% sind, abhängig von der Art der Gewinnung, üblicherweise Wasser, anorganische Mineralien oder Kohlenwasserstoffe.

Anionen enthaltende Additive im Sinne dieser Anmeldung sind Verbindungen eines Metalls des Periodensystems der Elemente mit einatomigen oder mehratomigen formal einfach oder mehrfach negativ geladenen Anionen, vorzugsweise Anionen aufgebaut aus Nichtmetallatomen.

Beispiele für derartige Metalle sind: Alkalimetalle, vorzugsweise Natrium, Kalium; Erdalkalimetalle, vorzugsweise Magnesium, Calcium, Barium; Metalle der 13. Gruppe des Periodensystems der Elemente, vorzugsweise Aluminium; Übergangsmetalle, vorzugsweise Mangan, Eisen, Cobalt, Nickel, Kupfer, Zink.

Beispiele für derartige Anionen sind: Halogenide und Polyhalogenide, beispielsweise Fluorid, Chlorid, Bromid, lodid, Triiodid; Chalkogenide und Polychalkogenide, beispielsweise Oxid, Hydroxid, Sulfid, Hydrogensulfid, Disulfid, Trisulfid, Tetrasulfid, Pentasulfid, Hexasulfid, Selenid, Tellurid; Pnicogenide, beispielsweise Amid, Imid, Nitrid, Phosphid, Arsenid; Pseudohalogenide, beispielsweise Cyanid, Cyanat, Thiocyanat; komplexe Anionen, beispielsweise Phosphat, Hydrogenphoshat, Dihydrogenphosphat, Sulfat, Hydrogensulfat, Sulfit, Hydrogensulfit, Thiosulfat, Hexacyanoferrate, Tetrachloroaluminat, Tetrachloroferrat.

Beispiele für Anionen enthaltenden Additive sind: Aluminium(III)-chlorid, Eisen(III)-chlorid, Eisen(II)-sulfid, Natriumbromid, Kaliumbromid, Natriumiodid, Kaliumiodid, Kaliumthiocyanat, Natriumthiocyanat, Dinatriumsulfid (Na₂S), Dinatriumtetrasulfid (Na₂S₄), Dinatriumpentasulfid (Na₂S₅), Dikaliumpentasulfid (K₂S₅), Dikaliumhexasulfid (K₂S₆), Calciumtetrasulfid (CaS₄), Bariumtrisulfid (BaS₃), Dikaliumselenid (K₂Se), Trikaliumphosphid (K₃P), Kaliumhexacyanoferrat (II), Kaliumhexacyanoferrat (III), Kupfer(I)-thiocyanat, Kaliumtriiodid, Cäsiumtriiodid, Natriumhydroxid, Kaliumhydroxid, Cäsiumhydroxid, Natriumoxid, Kaliumoxid, Cäsiumoxid, Kaliumcyanid, Kaliumcyanat, Natriumtetraaluminat, Mangan(II)-sulfid, Cobalt(II)-sulfid, Nickel(II)-sulfid, Kupfer(II)-sulfid, Zinksulfid, Trinatriumphosphat, Dinatriumhydrogenphosphat, Natriumdihydrogenphosphat, Dinatriumsulfat, Natriumhydrogensulfat, Dinatriumsulfit, Natriumhydrogensulfit, Natriumthiosulfat, Trikaliumphosphat, Dikaliumhydrogenphosphat, Kaliumdihydrogenphosphat, Dikaliumsulfat, Kaliumhydrogensulfat, Dikaliumsulfit, Kaliumhydrogensulfit, Kaliumthiosulfat.

Anionen enthaltenden Additive im Sinne dieser Anmeldung sind weiterhin Mischungen von zwei oder mehreren Verbindungen eines Metalls des Periodensystems der Elemente mit einatomigen oder mehratomigen formal einfach oder mehrfach negativ geladenen Anionen, vorzugsweise Anionen aufgebaut aus Nichtmetallatomen. Hierbei ist nach derzeitigem Kenntnisstand das Mengenverhältnis der Einzelkomponenten nicht kritisch.

Besonders bevorzugte Anionen enthaltenden Additive sind Alkalimetallchalkogenide, beispielsweise binäre Verbindungen zwischen einem Alkalimetall, nämlich Lithium, Natrium, Kalium, Rubidium oder Cäsium und einem Chalkogen, nämlich Sauerstoff, Schwefel, Selen oder Tellur.
Es sind selbstverständlich auch Mischungen dieser binären Verbindungen möglich, wobei die Mischungsverhältnisse nach derzeitiger Kenntnis nicht kritisch sind.

Ganz besonders bevorzugte Anionen enthaltenden Additive sind Dinatriumtetrasulfid (Na₂S₄), Dinatriumpentasulfid (Na₂S₅), Dikaliumpentasulfid (K₂S₅), Dikaliumhexasulfid (K₂S₆), Natriumthiocyanat (NaSCN), Kaliumthiocyanat (KSCN), Natriumhydroxid (Na-OH) oder Kaliumhydroxid (KOH) sowie Mischungen mindestens zweier dieser Komponenten.

Verfahren zur Herstellung von oben genannten Anionen enthaltenden Additiven sind grundsätzlich bekannt und in der Literatur beschrieben.

Beispielsweise können Alkalimetallpolysulfide der Formel M₂Sₓ (x = 2, 3, 4, 5, 6) direkt aus den Alkalimetallsulfiden und der entsprechenden Menge Schwefel durch Zusammenschmelzen bei Temperaturen von 400 bis 500 °C hergestellt werden. Die entsprechenden Alkalimetallsulfide (M₂S) können beispielsweise durch Reduktion der entsprechenden Alkalimetallsulfate mit Kohlenstoff hergestellt werden. Ein weiteres gut geeignetes Verfahren zur Herstellung von Alkalimetallpolysulfiden ist die direkte Reaktion von Alkalimetallen mit Schwefel wie zum Beispiel in US 4,640,832 beschrieben. Weitere geeignete Verfahren zur Herstellung der Alkalimetallpolysulfide sind die Umsetzung von Alkaümetallcarbonaten oder Alkalimetallhydroxiden mit Schwefel, die Reaktion von Alkatimetallsulfiden mit Schwefel, die Reaktion von Alkalimetallsulfiden oder Alkalimetallhydogensulfiden in wässriger oder alkoholischer Lösung mit Schwefel oder die Umsetzung von Alkalimetallen mit Schwefel in flüssigem Ammoniak.

Vorzugsweise enthält die erfindungsgemäße Mischung elementaren Schwefel im Bereich von 50 bis 99,999 Gew.-%, vorzugsweise im Bereich von 80 bis 99,99 Gew.-%, besonders bevorzugt 90 bis 99,9 Gew.-%, jeweils bezogen auf die Gesamtmasse der erfindungsgemäßen Mischung.

Vorzugsweise enthält die erfindungsgemäße Mischung die erfindungsgemäßen Anionen enthaltende Additive im Bereich von 0,001 bis 50 Gew.-%, vorzugsweise im Bereich von 0,01 bis 20 Gew.-%, besonders bevorzugt 0,1 bis 10 Gew.-%, jeweils bezogen auf die Gesamtmasse der erfindungsgemäßen Mischung.

Die erfindungsgemäße Mischung kann weitere Zusatzstoffe enthalten, beispielsweise Additive, die den Schmelzpunkt der Mischung herabsetzen. Im Allgemeinen liegt die Gesamtmenge dieser Zusatzstoffe im Bereich von 0,01 bis 50 Gew.-%, bezogen auf die Gesamtmasse der erfindungsgemäßen Mischung.

Die Summe der Komponenten der erfindungsgemäßen Mischung ergibt 100 %.

Die erfindungsgemäße Mischung, enthaltend elementaren Schwefel und ein Anionen enthaltendes Additiv, gegebenenfalls flüssige erfindungsgemäße Mischung (wie weiter unten definiert), kann wie folgt hergestellt werden.

Alle Komponenten (Schwefel und das erfindungsgemäße Anionen enthaltene Additiv oder mehrere erfindungsgemäße Anionen enthaltende Additive) werden im festen Zustand im entsprechenden Massenverhältnis miteinander vermischt und gegebenenfalls anschließend aufgeschmolzen, um die fertige flüssige Mischung zu erhalten.

Alternativ wird zunächst der elementare Schwefel geschmolzen und dazu das erfindungsgemäße Anionen enthaltendes Additiv oder mehrere erfindungsgemäße Anionen enthaltende Additive unter Mischen hinzugefügt und gegebenenfalls die erhaltene Mischung durch Abkühlen in den festen Zustand übergeführt. Vorzugsweise löst sich das Anionen enthaltende Additiv oder die Anionen enthaltenden Additive in der Schwefelschmelze praktisch vollständig auf.

Gegenstand der vorliegenden Anmeldung sind auch die oben beschriebenen erfindungemäßen Mischungen, enthaltend elementaren Schwefel und ein Anionen enthaltendes Additiv in fluider Form, wobei das Anionen enthaltende Additiv ausgewählt wird aus der Gruppe bestehend aus Verbindungen eines Metalls des Periodensystems der Elemente mit einatomigen oder mehratomigen formal einfach oder mehrfach negativ geladenen Anionen. Diese Mischungen werden hiernach flüssigen erfindungemäße Mischungen" genannt.

Der Begriff "flüssige erfindungsgemäße Mischung" bedeutet hierin, dass der Schwefel in dieser Mischung bei 101325 Pa (abs.) Druck oder auch höherem Druck zumindest teilweise, vorzugsweise vollständig, flüssig vorliegt.

Vorzugsweise hat die flüssige erfindungsgemäße Mischung bei einem Druck von 101325 Pa (abs.) eine Temperatur im Bereich von 120 °C bis 450 °C. Unter höherem Druck als 101325 Pa (abs:) hat die flüssige erfindungsgemäße Mischung vorzugsweise eine Temperatur im Bereich von 120 °C bis 600 °C.

Die flüssige erfindungsgemäße Mischung entspricht in ihrer Zusammensetzung den oben grundsätzlich oder als bevorzugt, besonders bevorzugt oder ganz besonders bevorzugt beschriebenen erfindungsgemäßen Mischungen, enthaltend elementaren Schwefel und ein erfindungsgemäßes Anionen enthaltendes Additiv.

Das Maximum der Viskosität der flüssigen erfindungsgemäßen Mischung bei einem Druck von 101325 Pa (abs.), gemessen, wie in den Beispielen angegeben, liegt in der Regel im Temperaturbereich von 120 °C bis 195°C im Bereich von 0,005 Pa·s bis 50 Pa·s, vorzugsweise 0,005 Pa·s bis 30 Pa·s, besonders bevorzugt 0,005 Pa·s bis 5 Pa·s.

Die Anmeldung betrifft weiterhin die Verwendung einer Mischung, enthaltend elementaren Schwefel und ein Anionen enthaltendes Additiv, vorzugsweise einer flüssigen erfindungsgemäßen Mischung, jeweils wie oben beschrieben, als Wärmeträger und/oder Wärmespeicher, wobei das Anionen enthaltende Additiv ausgewählt wird aus der Gruppe bestehend aus Verbindungen eines Metalls des Periodensystems der Elemente mit einatomigen oder mehratomigen formal einfach oder mehrfach negativ geladenen Anionen.

Die Anmeldung betrifft weiterhin die Verwendung einer Mischung, enthaltend elementaren Schwefel und ein Anionen enthaltendes Additiv, vorzugsweise einer flüssigen erfindungsgemäßen Mischung, jeweils wie oben beschrieben, als Wärmeträger und/oder Wärmespeicher in Kraftwerken, beispielsweise solarthermischen Kraftwerken, wobei das Anionen enthaltende Additiv ausgewählt wird aus der Gruppe bestehend aus Verbindungen eines Metalls des Periodensystems der Elemente mit einatomigen oder mehratomigen formal einfach oder mehrfach negativ geladenen Anionen.

Die Anmeldung betrifft weiterhin die Verwendung einer Mischung, enthaltend elementaren Schwefel und ein Anionen enthaltendes Additiv, vorzugsweise einer flüssigen erfindungsgemäßen Mischung, jeweils wie oben beschrieben, als Wärmeträger und/oder Wärmespeicher in Kraftwerken, beispielsweise solarthermischen Kraftwerken, bei einer Temperatur im Bereich von 120 °C bis 600 °C, wobei das Anionen enthaltende Additiv ausgewählt wird aus der Gruppe bestehend aus Verbindungen eines Metalls des Periodensystems der Elemente mit einatomigen oder mehratomigen formal einfach oder mehrfach negativ geladenen Anionen.

Vorzugsweise findet die oben beschriebene Verwendung der flüssigen erfindungsgemäßen Mischungen, insbesondere jene als Wärmeträger, unter Ausschluss von Luft und Feuchtigkeit, vorzugsweise in einem geschlossenen System von beispielsweise Rohrleitungen, Pumpen, Wärmetauschern, Regelvorrichtungen und Behältern statt.

Gegenstand der vorliegenden Anmeldung sind weiterhin Wärmeträger oder Wärmespeicher, welche eine Mischung, vorzugsweise in fluider Form, enthaltend elementaren Schwefel und ein Anionen enthaltendes Additiv umfassen, wobei das Anionen enthaltende Additiv ausgewählt wird aus der Gruppe bestehend aus Verbindungen eines Metalls des Periodensystems der Elemente mit einatomigen oder mehratomigen formal einfach oder mehrfach negativ geladenen Anionen.

Wärmeträger sind Medien, die von einer Wärmequelle, beispielsweise der Sonne in solarthermischen Kraftwerken, erwärmt werden und die in ihnen enthaltene Wärmemenge über eine bestimmte Strecke transportieren. Sie können dann diese Wärme auf ein anderes Medium, beispielsweise Wasser oder ein Gas, vorzugsweise über Wärmetauscher, übertragen, wobei dieses andere Medium dann beispielsweise eine Turbine antreiben kann. Wärmeträger können aber auch die in ihnen enthaltene Wärmemenge auf ein anderes, sich in einem Vorratsbehälter befindliches Medium (beispielsweise Kaliumnitrat-Natriumnitrat-Salzschmelze) übertragen und so die Wärme zur Speicherung weitergeben. Wärmeträger können aber auch selbst in einen Vorratsbehälter eingespeist werden und dort verbleiben; sie sind dann selbst sowohl Wärmeträger als auch Wärmespeicher.

Wärmespeicher sind Medien, üblicherweise stoffliche Zusammensetzungen, beispielsweise die erfindungsgemäßen Mischungen, die eine Wärmemenge über eine gewisse Zeit speichern können und sich üblicherweise in einem ortsfesten, vorzugsweise gegen Wärmeverlust isolierten, Behälter befinden.

Gegenstand der vorliegenden Anmeldung sind weiterhin solarthermische Kraftwerke, umfassend mit Mischungen, enthaltend elementaren Schwefel und ein Anionen enthaltendes Additiv, gefüllte Rohrleitungen, Wärmetauscher und/oder Behälter, wobei das Anionen enthaltende Additiv ausgewählt wird aus der Gruppe bestehend aus Verbindungen eines Metalls des Periodensystems der Elemente mit einatomigen öder mehratomigen formal einfach oder mehrfach negativ geladenen Anionen.

### Beispiele

Die physikalischen Eigenschaften wurden wie folgt gemessen:
Die dynamische Viskosität der Mischungen wurde in einem Temperaturbereich von 120 bis 195 °C mittels Rotationsviskosimetrie nach einer hausinternen Vorschrift wie folgt bestimmt. Der Messaufbau besteht aus einem stationären zylindrischen Gefäß, in dem sich ein drehbar gelagerter Vollzylinder befindet. Die zu vermessende Flüssigkeit wird in den Ringspalt gegeben. Anschließend wird das Drehmoment ermittelt, das erforderlich ist, um den Vollzylinder mit einer bestimmten Geschwindigkeit rotieren zu lassen. Über das erforderliche Drehmoment als Funktion des auftretenden Geschwindigkeitsgefälles kann die dynamische Viskosität des Fluids berechnet werden.

### Beispiel 1 (Allgemeine Vorschrift)

Die jeweilige Mischung wie in den Beispielen 2 bis 6 beschrieben, wurde unter Rühren in einer Stickstoffatmosphäre von Raumtemperatur auf 250 °C erhitzt. Ab ca. 120 °C wurde die Mischung flüssig. Beim weiteren Aufheizen nahm ab ca. 159 °C die Ausgangsviskosität signifikant zu, erreichte bei ca. 190 °C ein Maximum und fiel danach bei noch höherer Temperatur wieder ab, wie man anhand der Änderung des Rührerdrehmomentes feststellen konnte. Die Mischung wurde dann von 250 °C auf 150 °C abkühlen gelassen.

Dieser Aufheiz- und Abkühlvorgang wurde noch neun Mal durchgeführt. Dann wurde bei Raumtemperatur eine Probe der Mischung entnommen und wie oben beschrieben wurde die dynamische Viskosität der Probe bestimmt.

### Beispiel 2

Beispiel 1 wurde mit einer Mischung aus 3 g Dikaliumpentasulfid (K₂S₅) und 297 g Schwefel durchgeführt und die dynamische Viskosität einer Probe gemessen. Das Viskositätsmaximum lag bei 195 °C und betrug 5 Pa·s.

### Beispiel 3

Beispiel 1 wurde mit einer Mischung aus 5 g Kaliumhydroxid (KOH) und 295 g Schwefel durchgeführt und die dynamische Viskosität einer Probe gemessen. Das Viskositätsmaximum lag bei 195 °C und betrug 5 Pa·s.

### Beispiel 4

Beispiel 1 wurde mit einer Mischung aus 5 g Natriumhydroxid (NaOH) und 295 g Schwefel durchgeführt und die dynamische Viskosität einer Probe gemessen. Das Viskositätsmaximum lag bei 195 °C und betrug 30 Pa·s.

### Beispiel 5

Beispiel 1 wurde mit einer Mischung aus 3 g Dinatriumpentasulfid (Na₂S₅) und 297 g Schwefel durchgeführt und die dynamische Viskosität einer Probe gemessen. Das Viskositätsmaximum lag bei 195 °C und betrug 10 Pa·s.

### Beispiel 6

Beispiel 1 wurde mit einer Mischung aus 15 g Eisen(III)-chlorid (FeCl₃) und 285 g Schwefel durchgeführt und die dynamische Viskosität einer Probe gemessen. Das Viskositätsmaximum lag bei 195 °C und betrug 38 mPa·s.

### Beispiel 7 (zum Vergleich)

Beispiel 1 wurde mit 300g Schwefel wiederholt, und es wurde kein Anionen enthaltendes Additiv zugesetzt.

Der Schwefel wurde, wie in Beispiel 1 beschrieben, insgesamt zehn Mal aufgeheizt und abgekühlt.

Dann wurde bei Raumtemperatur eine Probe der Mischung genommen und wie oben beschrieben wurde die dynamische Viskosität bestimmt. Das Viskositätsmaximum lag bei 190 °C und betrug 90 Pa·s.

## Patentansprüche

1. Mischung enthaltend elementaren Schwefel und ein Anionen enthaltendes Additiv, **dadurch gekennzeichnet, dass** das Anionen enthaltende Additiv ausgewählt wird aus der Gruppe bestehend aus Verbindungen eines Metalls des Periodensystems der Elemente mit einatomigen oder mehratomigen formal einfach oder mehrfach negativ geladenen Anionen.

2. Mischung gemäß Anspruch 1, wobei das Anion enthaltende Additiv lonische Verbindungen eines Metalls des Periodensystems der Elemente mit einatomigen oder mehratomigen einfach oder mehrfach negativ geladenen Anionen sind.

3. Mischung gemäß einem der Ansprüche 1 oder 2, in fluider Form.

4. Mischung gemäß Anspruch 3 mit dem Maximum der Viskosität bei einem Druck von 101326 Pa (abs.) im Temperaturbereich von 120 °C bis 195 °C im Bereich von 0.005 Pa·s bis 50 Pa·s.

5. Verwendung einer Mischung, wie in den Ansprüchen 1 bis 4 definiert, als Wärmeträger und/oder Wärmespeicher.

6. Verwendung einer Mischung In fluider Form, wie in den Ansprüchen 3 bis 4 definiert, als Wärmeträger und/oder Wärmespeicher.

7. Verwendung wie in den Ansprüchen 5 bis 6 definiert, als Wärmeträger und/oder Wärmespeicher in Kraftwerken.

8. Wärmeträger und/oder Wärmespeicher, die eine Mischung, wie in den Ansprüchen 1 bis 4 definiert, umfassen.

9. Wärmeträger und/oder Wärmespeicher, die eine Mischung in fluider Form, wie in den Ansprüchen 3 bis 4 definiert, umfassen.

10. Solarthermische Kraftwerke umfassend, mit Mischungen, wie in den Ansprüchen 1 bits 4 definiert, gefüllte Rohrleitungen, Wärmetauscher und/oder Behälter.

11. Verfahren zur Herstellung einer Mischung enthaltend elementaren Schwefel und ein Anionen enthaltendes Additiv wobei man i) elementaren Schwefel und ein Anionen enthaltendes Additiv oder mehrere Anionen enthaltende Additive im festen Zustand im gewünschten Massenverhältnis miteinander vermischt und gegebenenfalls dann die Mischung durch Erhitzen in eine Schmelze überführt oder ii) wobei man zunächst den elementaren Schwefel schmilzt und dazu ein Anionen enthaltendes Additiv oder mehrere Anionen enthaltende Additive unter Mischen hinzufügt und gegebenenfalls die erhaltene Mischung durch Abkühlen in den festen Zustand überführt, wobei das Anionen enthaltende Additiv in i) und II) ausgewählt wird aus der Gruppe bestehend aus Verbindungen eines Metalls des Periodensystems der Elemente mit einatomigen oder mehratomigen formal einfach oder mehrfach negativ geladenen Anionen.

## Claims

1. A mixture comprising elemental sulfur and an additive comprising anions, wherein the additive comprising anions is selected from the group consisting of compounds of a metal of the Periodic Table of the Elements with monoatomic or polyatomic, formally singly or multiply negatively charged anions

2. The mixture according to claim 1, wherein the additive comprising anion comprises ionic compounds of a metal of the Periodic Table of the Elements with monoatomic or polyatomic, singly or multiply negatively charged anions.

3. The mixture according to either of claims 1 and 2 in fluid form.

4. The mixture according to claim 3 having a maximum viscosity in the range from 0.005 Pa·s to 50 Pa·s in the temperature range from 120°C to 195°C at a pressure of 101326 Pa (abs.).

5. The use of a mixture as defined in claims 1 to 4 as a heat carrier and/or heat accumulator.

6. The use of a mixture in fluid form as defined in claim 3 or 4 as a heat carrier and/or heat accumulator.

7. The use as defined in claim 5 or 6 as a heat carrier and/or heat accumulator in power plants.

8. A heat carrier and/or heat accumulator which comprises a mixture as defined in claims 1 to 4.

9. A heat carrier and/or heat accumulator which comprises a mixture in fluid form as defined in claim 3 or 4.

10. A solar thermal power plant comprising pipelines, heat exchangers and/or vessels filled with mixtures as defined in claims 1 to 4.

11. A process for preparing a mixture comprising elemental sulfur and an additive comprising anions, wherein i) elemental sulfur and an additive comprising anions or a plurality of additives comprising anions are mixed with one another in the desired mass ratio in the solid state, and the mixture is optionally then converted to a melt by heating, or ii) wherein the elemental sulfur is first melted and an additive comprising anions or a plurality of additives comprising anions are added thereto while mixing, and the resulting mixture is optionally converted to the solid state by cooling the additive comprising anions being selected from the group consisting of compounds of a metal of the Periodic Table of the Elements with monoatomic or polyatomic, formally singly or multiply negatively charged anions in i).

## Revendications

1. Mélange contenant du soufre élémentaire et un additif contenant des anions, **caractérisé en ce que** l'additif contenant des anions est choisi dans le groupe constitué par les composés d'un métal du tableau périodique des éléments avec des anions monoatomiques ou polyatomiques chargés formellement avec une ou plusieurs charges négatives.

2. Mélange selon la revendication 1, dans lequel l'additif contenant des anions correspond à des composés ioniques d'un métal du tableau périodique des éléments avec des anions monoatomiques ou polyatomiques chargés avec une ou plusieurs charges négatives.

3. Mélange selon l'une quelconque des revendications 1 ou 2, sous forme fluide.

4. Mélange selon la revendication 3, présentant une viscosité maximale à une pression de 101 326 Pa (abs.) dans la plage de température allant de 120 °C à 195 °C dans la plage allant de 0,005 Pa·s à 50 Pa·s.

5. Utilisation d'un mélange tel que défini dans les revendications 1 à 4 en tant que caloporteur et/ou accumulateur de chaleur.

6. Utilisation d'un mélange sous forme fluide, tel que défini dans les revendications 3 à 4, en tant que caloporteur et/ou accumulateur de chaleur.

7. Utilisation telle que définie dans les revendications 5 à 6 en tant que caloporteur et/ou accumulateur de chaleur dans des centrales électriques.

8. Caloporteurs et/ou accumulateurs de chaleur, comprenant un mélange, tel que défini dans les revendications 1 à 4.

9. Caloporteurs et/ou accumulateurs de chaleur, comprenant un mélange sous forme fluide, tel que défini dans les revendications 3 à 4.

10. Centrale électrique à énergie solaire, comprenant des canalisations, des échangeurs de chaleur et/ou des contenants remplis avec des mélanges tels que définis dans les revendications 1 à 4.

11. Procédé de fabrication d'un mélange contenant du soufre élémentaire et un additif contenant des anions, selon lequel i) du soufre élémentaire et un additif contenant des anions ou plusieurs additifs contenant des anions sont mélangés les uns avec les autres à l'état solide en le rapport massique souhaité, puis le mélange est éventuellement transformé en une masse fondue par chauffage, ou ii) le soufre élémentaire est tout d'abord fondu et un additif contenant des anions ou plusieurs additifs contenant des anions sont ajoutés à celui-ci avec mélange, et le mélange obtenu est éventuellement transformé à l'état solide par refroidissement, l'additif contenant des anions en i) et ii) étant choisi dans le groupe constitué par les composés d'un métal du tableau périodique des éléments avec des anions monoatomiques ou polyatomiques chargés formellement avec une ou plusieurs charges négatives.
